# EUROPÄISCHE PATENTSCHRIFT

(11) **EP 2 622 035 B1**
(45) Veröffentlichungstag und Bekanntmachung des Hinweises auf die Patenterteilung: **12.04.2023**
(21) Anmeldenummer: 11767213.9
(22) Anmeldetag: 27.09.2011
(51) Int. Cl.: C09J 123/14

(54) **VERKLEBUNG MIT SCHMELZKLEBSTOFFEN**
BONDING WITH MELT ADFHESIVE
ADHÉSIF THERMOFUSIBLE PRÉSENTANT UNE RÉSISTANCE AU LIAGE AMÉLIORÉE

(30) Priorität: 27.09.2010 DE 102010041463
(43) Veröffentlichungstag der Anmeldung: 07.08.2013
(73) Patentinhaber: Henkel AG & Co. KGaA, 40589 Düsseldorf (DE)
(72) Erfinder: LOTZ, Jürgen, 65399 Kiedrich (DE); KASPER, Dirk, 40597 Düsseldorf (DE); PIELERT, Lutz, 99092 Erfurt (DE)
(86) Internationale Anmeldenummer: PCT/EP2011/066745
(87) Internationale Veröffentlichungsnummer: WO 2012/041838

(56) Entgegenhaltungen:
- WO-A1-2006/069205
- WO-A1-2010/032600
- WO-A2-01/46277
- DE-A1-102007 060 533
- US-A- 4 528 312
- US-A- 5 965 657
- US-A1- 2004 127 614
- US-A1- 2009 203 847

## Beschreibung

Die Erfindung betrifft die Verwendung eines Schmelzklebstoffs mit hoher Härte zur Verklebung von Metall-, Papier- und/oder Kunststofffolien, wobei der Klebstoff in dünner Schicht aufgetragen werden kann. Die Erfindung betrifft weiterhin ein Verfahren zum Verkleben einer Metall-, Papier- und/oder Kunststofffolie auf einem Substrat.

Die Verklebung von Folien mit Klebstoffen ist bekannt. Es ist beispielsweise bekannt, Folien zur optischen Gestaltung oder als Oberflächenschutz auf verschiedene Werkstücke zu verkleben. Die Klebstoffe werden nach den unterschiedlichen Substraten ausgewählt. Dabei ist es bekannt, reaktive Klebstoffe einzusetzen. Diese führen nach ihrer Vernetzung zu einer guten Haftung der Substrate untereinander. Es ist aber ein Nachteil solcher Systeme, dass diese zur endgültigen Aushärtung eine gewisse Zeit benötigen, was sich auf einen anschließenden Weiterverarbeitungsprozess nachteilig auswirken kann.

Es ist auch bekannt, wässrige Klebstoffe auf beispielsweise Holzsubstraten einzusetzen. Eine mögliche Feuchtigkeit kann vom Substrat aufgenommen werden, was zur Beschleunigung des Klebevorganges führen kann. Diese Eigenschaft ist aber auch nachteilig, da dabei Form- und Oberflächenänderungen nicht auszuschließen sind.

Weiterhin ist die EP 2191947 A1 bekannt. Diese beschreibt ein Verfahren und eine Vorrichtung zum Beschichten von festen Werkstücken, wobei diese mit einem flexiblen Beschichtungsmaterial verklebt werden. Dabei kann ein thermoplastischer Klebstoff zusammen mit dem Beschichtungsmaterial aufgetragen werden; es ist aber auch möglich, dass eine vorbeschichtete Folie verklebt wird. Die Verklebung geschieht durch Druck und Erhitzen.

Darüber hinaus ist die WO 2001/062492 A2 bekannt. Diese beschreibt ein Holzsubstrat, das mit einer dekorativen Schicht verklebt ist. Zur Verklebung werden Schmelzklebstoffe mit einer hohen Shore D Härte offenbart, die insbesondere Polystyrol-basierte Polymere umfassen. Weitere Klebstoffe sind in den Dokumenten WO 01/46277 A3, WO 2010/032600 A1 und DE 102007060533 A1 beschrieben.

Die bekannten Klebstoffe zum Verkleben von flexiblen Folien mit flächigen Substraten führen in der Anwendung zu verschiedenen Problemen. Reaktive Klebstoffe benötigen bis zum Aufbau der endgültigen Haftung eine längere Reaktionszeit. Physikalisch härtende Klebstoffe auf Basis von Lösungen oder wässrigen Systemen ergeben bei der Verarbeitung Probleme dadurch, dass das Lösemittel die Substratoberfläche schädigen kann oder dass bei organischen Lösemitteln eine Gefährdung der Arbeitsumgebung zu beachten ist.

Bekannte Schmelzklebstoffe haben meist eine nicht ausreichende Härte, um eine feste Oberfläche zu erzeugen. Wird die Glasübergangstemperatur der Bindemittel erhöht oder Füllstoffe zugesetzt, steigt dabei die Applikationstemperatur. Für die Folienverklebung ist es aber notwendig, dass eine elastische, nicht spröde Verklebung erhalten wird; zusätzlich sollen bei der Applikation die Substrate nicht geschädigt werden. Ist die Klebstoffschicht zu spröde oder zu dick aufgetragen, treten Schädigungen in der Verbundhaftung auf und es kann durch die eingetragene Wärme zu Deformation der Substrate kommen.

Aufgabe der vorliegenden Erfindung ist es daher, einen Schmelzklebstoff bereitzustellen, der zum Verkleben von Metall-, Papier- und/oder Kunststofffolien verwendet werden kann. Dabei soll der Schmelzklebstoff eine gute Elastizität und eine hohe Härte aufweisen. Der Schmelzklebstoff soll auf die Metall-, Papier- und/oder Kunststofffolie aufgetragen werden und eine schnelle Verklebung ermöglichen, so dass eine unmittelbare Weiterverarbeitung erreicht werden kann.

Die Aufgabe wird durch die Verwendung eines Schmelzklebstoffs zur Verklebung von Metall-, Papier- und/oder Kunststofffolien gelöst, wobei der Schmelzklebstoff eine Shore D Härte von über 50 aufweist und die folgenden Komponenten enthält:

| | |
|---|---|
| - 10 bis 80 Gew.-% | mindestens eines thermomechanisch degradierten Polypropylencopolymeren, |

wobei das thermomechanisch degradierte Polypropylencopolymer durch thermomechanische Degradierung mindestens eines Polypropylencopolymers unter Scherbeanspruchung, in Gegenwart mindestens eines Radikalbildners, oberhalb des Erweichungspunktes (Ring und Kugel- Methode gemäß ASTM E-28) des Polypropylencopolymers hergestellt wird, wobei die bei 200°C bestimmte Schmelzviskosität (bestimmt unter Verwendung eines Brookfield Thermosel RVT Viskosimeters (erhältlich von Brookfield Engineering Laboratories, Inc., Stoughton, Mass. USA wobei für Viskositäten bis zu 100000 mPa·s wird eine Spindel 27 verwendet wahrend zur Bestimmung von Schmelzviskositäten großer als 100000 mPa·s eine Spindel 29 eingesetzt wird und die Rotationsgeschwindigkeit der jeweiligen Spindel wird so eingestellt, dass bei einer Temperatur von 200°C die Drehmomentwerte des Viskosimeters in einem Bereich von 10 bis 95 % des maximal zulässigen Drehmoments liegen) des thermomechanisch degradierten Polypropylencopolymers weniger als 70% der ebenfalls bei 200°C bestimmten Schmelzviskosität des Polypropylencopolymers beträgt,

| | |
|---|---|
| - 5 bis 60 Gew.-% | mindestens eines klebrigmachenden Harzes, |
| - 0 bis 40 Gew.-% | mindestens eines weiteren Additivs, |

wobei der Schmelzklebstoff eine Shore D Härte von über 50 aufweist (DIN EN ISO 868:2003).

Die Erfindung betrifft weiterhin eine Metall-, Papier- und/oder Kunststofffolie, die mindestens eine Klebstoffschicht eines erfindungsgemäß verwendeten Schmelzklebstoffs umfasst, sowie ein Verfahren zum Verkleben einer Metall-, Papier- und/oder Kunststofffolie auf einem Substrat.

Ein weiterer Gegenstand der vorliegenden Erfindung ist der erfindungsgemäß verwendete Schmelzklebstoff selbst.

Im Rahmen der vorliegenden Erfindung wird die Shore D Härte gemäß DIN EN ISO 868:2003 bestimmt, wobei die Messung mittels eines Typs D Durometer mit einem Prüfkörper mit einer Dicke von mindestens 1 cm bei einer Temperatur von 20°C durchgeführt wird. Die Ablesung der Shore D Härte erfolgt vorzugsweise 15 Sekunden nach dem Inkontaktbringen von Druckfuß und Prüfkörper.

Unter "Schmelzklebstoffen" werden im Sinne der vorliegenden Erfindung Klebstoffe verstanden, die als Schmelze auf die zu verklebenden Teile aufgetragen werden und beim Abkühlen unter Verfestigung abbinden.

Unter einem "Polypropylencopolymer" werden im Sinne der vorliegenden Erfindung Copolymere von Propylen mit anderen Comonomeren, wie beispielsweise Ethylen und/oder C₄ bis C₂₀ alpha-Olefinen verstanden.

Unter einem "thermomechanisch degradierten Polypropylencopolymer" wird im Sinne der vorliegenden Erfindung ein Polymer verstanden, das, ausgehend von einem Polypropylencopolymer, durch thermomechanische Degradierung in einer geeigneten Vorrichtung hergestellt wird. Dabei ist das unter vergleichbaren Bedingungen bestimmte gewichtsmittlere Molekulargewicht (M_{w}) des degradierten Polypropylencopolymers stets kleiner als das gewichtsmittlere Molekulargewicht (M_{w}) des Polypropylencopolymers.

Das Polypropylencopolymer, also das Ausgangspolymer, aus dem durch thermomechanische Degradierung das thermomechanisch degradierte Polypropylencopolymer der vorliegenden Erfindung hergestellt wird, wird im Rahmen der vorliegenden Erfindung auch als höhermolekulares, undegradiertes Polypropylencopolymer bezeichnet.

Unter dem Begriff "thermomechanische Degradierung" wird im Sinne der vorliegenden Erfindung ein Polymerketten-verkürzender und Molekulargewichts-reduzierender Abbauprozess verstanden, der in einer geeigneten Vorrichtung, wie beispielsweise einem Extruder unter Wärmeeinwirkung und Scherbeanspruchung durchgeführt wird.

Im Rahmen der vorliegenden Erfindung ist es insbesondere vorteilhaft, wenn die thermomechanische Degradierung in der Weise durchgeführt wird, dass bei der genannten Degradierung keine weiteren reaktiven Verbindungen, wie etwa olefinisch ungesättigte Monomere anwesend sind.

Der in der vorliegenden Erfindung verwendete Schmelzklebstoff zeichnet sich durch seine hohe Shore D Härte von über 50 aus und erlaubt so die Herstellung von mit Folien beschichteten kratzfesten Substraten, wie beispielsweise Holz-, Metall- oder Kunststoffformkörpern. Die auf den beschichteten Folien befindliche Klebstoffschicht des Schmelzklebstoffs ist bei 20°C nicht klebrig, so dass die Folien in einfacher Weise, ohne miteinander zu verkleben, gelagert werden können. Darüber hinaus ist die genannte Klebstoffschicht des Schmelzklebstoffes leicht in der Wärme aktivierbar, so dass unter gleichzeitiger Anwendung von Druck und Temperatur eine einfache und aufgrund der geringen offenen Zeit des Schmelzklebstoffs auch schnelle Verklebung der beschriebenen Folien erreicht wird. Die in der vorliegenden Erfindung eingesetzten Schmelzklebstoffe weisen zudem eine hohe Elastizität und Wärmestandsfestigkeit auf, so dass die gebildeten Klebebindungen auch unter mechanisch und/oder thermisch anspruchsvollen Bedingungen stabil bleiben.

Der erfindungsgemäß verwendete Schmelzklebstoff enthält mindestens ein Copolymer auf Basis von Propylen, mindestens ein klebrigmachendes Harz und gegebenenfalls mindestens ein weiteres Additiv.

Geeignete thermomechanisch degradierte Polypropylencopolymere können aus handelsüblichen höhermolekularen, undegradierten Polypropylencopolymeren durch ein thermomechanische Degradierungsverfahren hergestellt werden, das vorzugsweise in einem Extruder bei Temperaturen von über 150°C durchgeführt wird.

Der erfindungsgemäß verwendete Schmelzklebstoff umfasst, bezogen auf die Gesamtmenge des Schmelzklebstoffs, 10 bis 80 Gew.-%, vorzugsweise 20 bis 70 Gew.- % und besonders bevorzugt 30 bis 60 Gew.-% mindestens eines thermomechanisch degradierten Polypropylencopolymeren.

Selbstverständlich kann der erfindungsgemäß verwendete Schmelzklebstoff auch Mischungen aus unterschiedlichen thermomechanisch degradierten Polypropylencopolymeren enthalten, wobei insbesondere Mischungen aus zwei unterschiedlichen thermomechanisch degradierten Polypropylencopolymeren bevorzugt sind.

Das in der vorliegenden Erfindung verwendete thermomechanisch degradierte Polypropylencopolymer ist ein Polyolefincopolymer, das in polymerisierter Form neben Propylen mindestens ein weiteres Comonomer enthält, das vorzugsweise ausgewählt wird aus Ethylen und/oder C₄ bis C₂₀ alpha-Olefinen. Bevorzugte C₄ bis C₂₀ alpha-Olefine sind insbesondere aliphatische C₄ bis C₂₀ alpha-Olefine, die keine aromatischen Gruppen umfassen, wie beispielsweise Buten, Penten, Hexen, Hepten, Octen, Nonen, Decen, Dodecen, 4-Methyl-1-penten, 3,5,5-Trimethyl-1-hexen und 5-Ethyl-1-nonen. In einer Ausführungsform der Erfindung werden als degradiertes Polypropylencopolymer Terpolymere auf Basis von Propylen, Ethylen und C₄ bis C₂₀ aliphatischen alpha-Olefinen verwendet.

Der Propylenanteil im thermomechanisch degradierten Polypropylencopolymer der vorliegenden Erfindung liegt vorzugsweise zwischen 50 bis 99 Gew.-%, insbesondere zwischen 60 bis 97 Gew.-% und besonders bevorzugt zwischen 65 bis 95 Gew.-%, jeweils bezogen auf das Gesamtgewicht des themomechanisch degradierten Polypropylencopolymers. Thermomechanisch degradierte Polypropylencopolymere, welche die vorgenannten Gewichtsanteile an Propylen aufweisen, können in besonders effektiver Weise aus den entsprechenden höhermolekularen, undegradierten Polypropylencopolymeren durch thermomechanische Degradierung unter starker Molekulargewichtsreduzierung und Viskositätserniedrigung erhalten werden.

Sofern vorhanden, liegt der Ethylengehalt im thermomechanisch degradierten Polypropylencopolymer der vorliegenden Erfindung vorzugsweise zwischen 1 bis 25 Gew.-% und besonders bevorzugt zwischen 2 bis 20 Gew.-%, jeweils bezogen auf das Gesamtgewicht des thermomechanisch degradierten Polypropylencopolymers. Thermomechanisch degradierte Polypropylencopolymere, welche die vorgenannten Gewichtsanteile an Ethylen aufweisen, können ebenfalls in besonders effektiver Weise aus den entsprechenden höhermolekularen, undegradierten Polypropylencopolymeren durch thermomechanische Degradierung unter starker Molekulargewichtsreduzierung und Viskositätserniedrigung erhalten werden.

Das gewichtsmittlere Molekulargewicht (M_{w}) des thermomechanisch degradierten Polypropylencopolymers der vorliegenden Erfindung beträgt vorzugsweise 1000 g/mol bis 200000 g/mol, besonders bevorzugt 10000 g/mol bis 150000 g/mol und ganz besonders bevorzugt 20000 g/mol bis 100000 g/mol.

Im Rahmen der vorliegenden Erfindung wird das gewichtsmittlere Molekulargewicht (M_{w}) mittels Gelpermeationschromatographie (GPC) unter Verwendung eines Polystyrolstandards bestimmt.

Das vorgenannte thermomechanisch degradierte Polypropylencopolymer wird durch thermomechanische Degradierung eines höhermolekularen, undegradierten Polypropylencopolymer erhalten, wobei das letztgenannte Polymer vorzugsweise ein gewichtsmittleres Molekulargewicht (M_{w}) von 100000 g/mol bis 3000000 g/mol, besonders bevorzugt 150000 g/mol bis 1000000 g/mol und ganz besonders bevorzugt 200000 g/mol bis 800000 g/mol aufweist.

Der Einsatz hochmolekularer, undegradierter Polypropylencopolymere mit einem gewichtsmittleren Molekulargewicht von mindestens 100000 g/mol, vorzugsweise von mindestens 150000 g/mol und insbesondere von mindestens 200000 g/mol ist vorteilhaft, da die genannten Polymere kostengünstig herstellbar sind und effektiv zu den thermomechanisch degradierten Polypropylencopolymeren der vorliegenden Erfindung abgebaut werden können.

Vorzugsweise beträgt das gewichtsmittlere Molekulargewicht (M_{w}) des thermomechanisch degradierten Polypropylencopolymers weniger als 70%, besonders bevorzugt weniger als 60%, ganz besonders bevorzugt weniger als 50% und überaus bevorzugt weniger als 40% des unter identischen Bedingungen bestimmten gewichtsmittleren Molekulargewichts (M_{w}) des höhermolekularen, undegradierten Polypropylencopolymers. Unter dem gewichtsmittleren Molekulargewicht (M_{w}) des höhermolekularen, undegradierten Polypropylencopolymers wird dabei dessen Ausgangsmolekulargewicht verstanden, also das gewichtsmittlere Molekulargewicht (M_{w}) des genannten Polymers vor Durchführung der thermomechanischen Degradierung.

Das thermomechanisch degradierte Polypropylencopolymer der vorliegenden Erfindung wird durch thermomechanische Degradierung mindestens eines undegradierten, höhermolekularen Polypropylencopolymers unter Scherbeanspruchung oberhalb des Erweichungspunktes des undegradierten, höhermolekularen Polypropylencopolymers hergestellt, wobei die bei 200°C bestimmte Schmelzviskosität des thermomechanisch degradierten Polypropylencopolymers weniger als 70%, besonders bevorzugt weniger als 60%, ganz besonders bevorzugt weniger als 50%, überaus bevorzugt weniger als 40% der ebenfalls bei 200°C bestimmten Schmelzviskosität des undegradierten, höhermolekularen Polypropylencopolymers beträgt.

Unter der "Schmelzviskosität" des undegradierten, höhermolekularen Polypropylencopolymers wird dabei dessen Ausgangsschmelzviskosität verstanden, also die bei 200°C bestimmte Schmelzviskosität des undegradierten, höhermolekularen Polypropylencopolymers vor der Durchführung der thermomechanischen Degradierung.

Im Rahmen der vorliegenden Erfindung wird die Schmelzviskosität bei 200°C bestimmt, vorzugsweise unter Verwendung eines Brookfield Thermosel RVT Viskosimeters (erhältlich von Brookfield Engineering Laboratories, Inc., Stoughton, Mass. USA). Für Viskositäten bis zu 100000 mPa·s wird eine Spindel 27 verwendet, während zur Bestimmung von Schmelzviskositäten größer als 100000 mPa·s eine Spindel 29 eingesetzt wird. Die Rotationsgeschwindigkeit der jeweiligen Spindel wird so eingestellt, dass bei einer Temperatur von 200°C die Drehmomentwerte des Viskosimeters in einem Bereich von 10 bis 95 %, vorzugsweise bei 50% des maximal zulässigen Drehmoments liegen.

Der "Erweichungspunkt" wird im Rahmen der vorliegenden Erfindung mit Hilfe der "Ring und Kugel-" Methode gemäß ASTM E-28 bestimmt, wobei vorzugsweise ein Ring- und Kugelautomat HRB 754 der Firma Walter Herzog GmbH eingesetzt wird.

Die bei 200°C bestimmte Schmelzviskosität des thermomechanisch degradierten Polypropylencopoylmers der vorliegenden Erfindung beträgt vorzugsweise 100 mPa·s bis 200000 mPa·s, besonders bevorzugt 1000 mPa·s bis 100000 mPa·s, überaus bevorzugt 2000 mPa·s bis 80000 mPa·s und ganz besonders bevorzugt 6000 mPa·s bis 60000 mPa·s.

Die thermomechanisch degradierten Polypropylencopoylmere der vorliegenden Erfindung werden dabei vorzugsweise aus undegradierten, höhermolekularen Polypropylencopolymeren erhalten, wobei die letztgenannten Polymere vorzugsweise eine bei 200°C bestimmte Schmelzviskosität von mindestens 300000 mPa·s aufweisen. Insbesondere liegt die bei 200°C bestimmte Schmelzviskosität der jeweiligen undegradierten, höhermolekularen Polypropylencopoylmere zwischen 350000 mPa·s und 20000000 mPa s, vorzugsweise zwischen 400000 mPa·s und 10000000 mPa·s und besonders bevorzugt zwischen 450000 mPa·s und 5000000 mPa·s.

Durch die thermomechanische Degradierung des Polypropylencopolymers weisen die thermomechanisch degradierten Polypropylencopolymere der vorliegenden Erfindung vorzugsweise mindestens 0,5·10⁻⁵ mol, besonders bevorzugt mindestens 2,0·10⁻⁵ mol und überaus bevorzugt mindestens 5,0·10⁻⁵ mol an funktionellen Gruppen pro Gramm Polymer auf, wobei die funktionellen Gruppen insbesondere ausgewählt werden aus Sauerstoffumfassenden funktionellen Gruppen, wie etwa OH- , Lacton-, Acetylester-, Aldehyd-, Keton-,und Carbonsäure-Gruppen, sowie aus Vinyliden-Gruppen. Thermomechanisch degradierte Polypropylencopolymere, welche die vorgenannte Konzentration an funktionellen Gruppen aufweisen, zeigen insbesondere eine gute Substrathaftung.

Die Konzentration der funktionellen Gruppen im thermomechanisch degradierten Polypropylencopolymer der vorliegenden Erfindung kann vom Fachmann leicht unter Verwendung geläufiger spektroskopischer Methoden, wie beispielsweise NMR- und/oder IR-Spektroskopie bestimmt werden.

Die thermomechanisch degradierten Polypropylencopoylmere der vorliegenden Erfindung können effektiv hergestellt werden, wenn die thermomechanische Degradierung der Polymere in Gegenwart mindestens eines Radikalbildners durchgeführt wird.

Unter einem "Radikalbildner" wird im Sinne der vorliegenden Erfindung eine Substanz verstanden, die durch äußere Einwirkung, wie beispielsweise Wärme und/oder Strahlung, in Radikale zerfällt.

Geeignete Radikalbildner sind in erster Linie Peroxo- oder Diazogruppen enthaltende Verbindungen, wobei Peroxide, wie etwa organische Peroxide, aufgrund ihrer guten kommerziellen Verfügbarkeit und leichten Handhabbarkeit bevorzugt sind. Vorteilhafte Radikalbildner können beispielsweise ausgewählt werden aus den folgenden Produkten bzw. Verbindungen und/oder aus deren beliebigen Mischungen: TRIGONOX 101^{®} (2,5-Dimethyl-2,5-di-[tert-butylperoxyl]hexan), TRIGONOX 3010 (3,6,9-Triethyl-3,6,9-trimethyl-1,4,7-triperoxonan), beide kommerziell erhältlich von AKZO, Di-tert-amylperoxid, kommerziell erhältlich von CK Witco als DTAP^{®} und von AKZO als Trigonox 2010, Dicumylperoxid, Di-tert-butylperoxid, 2,5-Dimethyl-2,5-di(tert-butyl peroxy)-3-hexin, 1,3-Bis(tert-butylperoxyisopropyl)phenyl, 1,1-Bis(tert-butylperoxy)-3,3,5-trimethylcyclohexan, n-Butyl-4,4-bis(tert-butylperoxy)valerat, Benzoylperoxid, p-Chlorbenzoylperoxid, 2,4-Dichlorbenzoylperoxid, Tert-butylperoxybenzoat, tert-Butylperoxyisopropylcarbonat, Diacetylperoxid, Lauroylperoxid, Tert-Butylcumylperoxid, Tert-butylperoxy-2-ethylhexanoat.

Bevorzugte Peroxide besitzen eine in Monochlorbenzol bei 150°C bestimmte Halbwertzeit von 0,01 h bis 10 h, vorzugsweise von 0,1 h bis 5 h und besonders bevorzugt von 0,3h bis 3h.

Zur Herstellung der thermomechanisch degradierten Polypropylencopoylmere ist es insbesondere vorteilhaft, wenn im Rahmen der thermomechanischen Degradierung den undegradierten, höhermolekularen Polypropylencopoylmeren der Radikalbildner in einer Menge von 0,01 und 5 Gew.-%, vorzugsweise in einer Menge von 0,02 bis 2 Gew.-% und insbesondere in einer Menge von 0,1 und 1,5 Gew.-%, jeweils bezogen auf die Gesamtmenge des undegradierten, höhermolekularen Polypropylencopoylmers zugegeben wird.

Vorzugsweise wird als Radikalbildner ein Peroxid in einer Menge von 0,01 und 3 Gew.-%, vorzugsweise von 0,1 bis 2 Gew.-% und insbesondere von 0,2 und 1,5 Gew.-%, jeweils bezogen auf die Gesamtmenge an höhermolekularem, undegradierten Polypropylencopolymer zugegeben.

Durch die beschriebene Menge an Radikalbildner bzw. Peroxid kann der thermomechanische Degradierungsprozess bei einer Temperatur von 100°C bis 350°C, vorzugsweise von 120°C bis 320°C und besonders bevorzugt von 140°C bis 300°C durchgeführt werden.

Eine geeignete Vorrichtung zur Durchführung der thermomechanische Degradierung ist vorzugsweise ein Extruder. Unter dem Begriff "Extruder" können im Sinne der vorliegenden Erfindung vorzugsweise sowohl Einschnecken-, als auch Doppelschneckenextruder verstanden werden. Letztgenannte sind technisch aufwändiger und werden in unterschiedlichen Bauformen angeboten. Man unterscheidet dabei insbesondere zwischen gleich- oder gegenlaufenden, dichtkämmenden oder tangierenden, längs bzw. quer offenen oder geschlossenen und zylindrischen oder konischen Bauarten. Auch können Compounder, Expansionsextruder, Ringextruder oder Planetenwalzenextruder eingesetzt werden.

Ein zum Einsatz kommender Extruder kann ein Gehäuse mit einer Zuführseite und einer Abgabeseite umfassen, in dem wenigstens eine Schnecke drehbar gelagert sein kann, von deren Schneckenkern ein beispielsweise schraubenlinienförmig verlaufender Steg absteht. Das Gehäuse kann auf der Zuführseite wenigstens eine Zuführöffnung für die im Extruder zu verarbeitenden undegradierten, höhermolekularen Polypropylencopoylmere aufweisen sowie optional ein oder mehrere Beschickungsöffnungen für Additive, Zusatz- und/oder Hilfsstoffe, durch die insbesondere mindestens ein Radikalbildner, wie beispielsweise ein Peroxid zugeführt wird. Unter Scherbeanspruchung und insbesondere unter Wärmeeinwirkung kann dann das thermomechanisch degradierte Polypropylencopoylmer aus einem entsprechenden undegradierten, höhermolekularen Polypropylencopoylmeren oberhalb dessen Erweichungspunktes im Extruder, vorzugsweise in Gegenwart von Peroxiden hergestellt werden.

Der Erweichungspunkt des thermomechanisch degradierten Polypropylencopolymers der vorliegenden Erfindung liegt vorzugsweise zwischen 80°C und 170°C, besonders bevorzugt zwischen 100°C und 160°C und überaus bevorzugt zwischen 120°C und 150°C, wodurch die Schmelzklebstoffe der vorliegenden Erfindung eine hohe Wärmestandsfestigkeit aufweisen und somit eine stabile Verklebung auch unter thermisch anspruchsvollen Bedingungen gewährleisten.

Durch die thermomechanische Degradierung der Polypropylencopolymere werden niedrigviskose Polymere mit besonderer Kristallinität erhalten, die den erfindungsgemäß verwendeten Klebstoffen neben einer besonders leichten Verarbeitbarkeit auch gleichzeitig eine hohe Shore D Härte von über 50 verleihen.

Um eine besonders feste Oberflächenverklebung zu ermöglichen ist es insbesondere vorteilhaft, wenn der erfindungsgemäß verwendete Klebstoff eine Shore D Härte von über 51, besonders bevorzugt von über 53 und ganz besonders bevorzugt von über 54 aufweist.

Vorzugsweise weisen die thermomechanisch degradierten Polypropylencopolymere der vorliegenden Erfindung eine Glasübergangstemperatur (Tg) von kleiner als 0°C, besonders bevorzugt von kleiner als -10°C auf, wobei die Glasübergangstemperatur insbesondere größer ist als -40°C.

Die Glasübergangstemperatur (Tg) wird im Rahmen der vorliegenden Erfindung in bekannter Weise mittels DSC (Differential Scanning Calorimetry), vorzugsweise unter Verwendung eines DSC Q2000 der TA Instruments bestimmt.

Besonders vorteilhafte erfindungsgemäß verwendbare Schmelzklebstoffe, welche sich durch eine sehr hohe Shore D Härte, eine besonders gute Verarbeitbarkeit in Kombination mit einer hohen Elastizität und Wärmestandsfestigkeit auszeichnen, werden im Sinne der vorliegenden Erfindung erhalten, wenn der erfindungsgemäß verwendete Klebstoff mindestens zwei unterschiedliche thermomechanisch degradierte Polypropylencopolymere umfasst, wobei mindestens ein thermomechanisch degradiertes Polypropylencopolymer eine Schmelzenthalpie von 1 J/g bis 50 J/g und mindestens ein weiteres thermomechanisch degradiertes Polypropylencopolymer eine Schmelzenthalpie von 55 J/g bis 120 J/g aufweist.

Die Schmelzenthalpie wird im Rahmen der vorliegenden Erfindung mittels DSC (Differential Scanning Calorimetry) nach DIN EN ISO 11357-3 bestimmt.

Insbesondere sind Kombinationen von mindestens zwei unterschiedlichen thermomechanisch degradierten Polypropylencopolymeren bevorzugt, in denen
- mindestens ein thermomechanisch degradiertes Polypropylencopolymer eine Schmelzenthalpie von 5 J/g bis 40 J/g, besonders bevorzugt von 8 J/g bis 30 J/g und/oder
- mindestens ein weiteres thermomechanisch degradiertes Polypropylencopolymer eine Schmelzenthalpie von 60 J/g bis 100 J/g, besonders bevorzugt von 62 J/g bis 90 J/g aufweist.

Als weiteren Bestandteil enthält der erfindungsgemäß verwendete Schmelzklebstoff mindestens ein klebrigmachendes Harz. Das Harz bewirkt eine zusätzliche Klebrigkeit und kann auch die Haftung verbessern. Es handelt sich dabei insbesondere um Harze, die einen Erweichungspunkt von 60 bis 140 °C besitzen. Es sind dieses zum Beispiel aromatische, aliphatische oder cycloaliphatische Kohlenwasserstoff-Harze, sowie modifizierte oder hydrierte Derivate. Weitere im Rahmen der Erfindung anwendbare Harze sind z.B. Polyterpenharze, phenolisch oder aromatisch modifizierte Polyterpenharze, modifizierte Naturharze, wie Harzsäuren aus Balsamharz, Tallharz oder Wurzelharz, ggf. auch Hydroabietylalkohol und deren Ester, Acrylsäure-Copolymerisate, wie Styrol-Acrylsäure-Copolymere und Harze auf Basis funktioneller Kohlenwasserstoffharze. Insbesondere sind Kohlenwasserstoff-Harze geeignet. Solche Herze sind kommerziell verfügbar. Sie werden in einer Menge von 5 bis 60 Gew.-%, bevorzugt von 10 bis 50 Gew.-%, eingesetzt, jeweils bezogen auf die Gesamtmenge des erfindungsgemäß verwendbaren Schmelzklebstoffs.

Der erfindungsgemäß verwendbare Schmelzklebstoff kann neben den oben genannten Bestandteilen noch weitere, üblicherweise in Schmelzklebstoffen eingesetzte Bestandteile als Additive enthalten. Hierzu zählen beispielsweise Weichmacher, Stabilisatoren, Wachse, Haftvermittler, Füllstoffe, wie etwa Pigmente und/oder Antioxidantien. Damit können bestimmte anwendungstechnische Eigenschaften, wie z. B. Kohäsionsfestigkeit, Viskosität, Erweichungspunkt beeinflusst werden. Weiterhin können Füllstoffe zur Festigkeitserhöhung und ggf. der Kostenreduzierung eingesetzt werden.

Zusätzlich zu den oben erwähnten Bestandteilen kann der erfindungsgemäß verwendbare Schmelzklebstoff ggf. noch weitere elastische thermoplastische Polymere enthalten. Diese Polymere können verschiedene anwendungstechnische Eigenschaften des Schmelzklebstoffs verbessern, z. B. Kohäsion, Wärmestandfestigkeit, Kälteflexibilität. Unter solchen elastischen Polymeren sind insbesondere Styrol-Block-Copolymere zu verstehen, die elastische oder Kautschuk-elastische Eigenschaften aufweisen können. Es kann sich dabei um 2 Block- oder 3 Block-Copolymere handeln, die mindestens einen Styrol-Block aufweisen können. Beispiele dafür sind SBR, SAN, Styrol-Isopren-Copolymere (SIS), Styrol-Ethylen/Buthylen-Copolymere (SEBS), Styrol-Ethylen/Propylen-Copolymere (SEPS), Styrol-Isopren-Butylen-Copolymere (SIBS), Strylol-Butadien-Copolymere (SBS), hydrierte Styrol-Butylen-Butadien-Copolymere (SBBS). Solche Block-Copolymere sind dem Fachmann bekannt und kommerziell erhältlich. Weitere Beispiele sind Polybuten oder seine Copolymere, Polymethylvinylether u. ä. Polymere, sowie Polyphenylenoxid und Modifikationen davon. Dabei sollen diese zusätzlichen Polymere bei Raumtemperatur (22°C) fest sein und sich homogen mit dem erfindungsgemäß verwendbaren Schmelzklebstoff mischen lassen. Eine Mikrophasenstruktur ist dabei nicht ausgeschlossen. Gegebenenfalls können die weiteren Polymeren zum Beispiel durch Pfropfung funktionalisiert sein. Ein bevorzugtes Pfropfungsmittel stellen beispielsweise Dicarbonsäuren und deren Anhydride dar.

Die Polymere sind vom Fachmann so auszuwählen, dass eine gute Verträglichkeit mit den anderen Bestandteilen des erfindungsgemäß verwendbaren Schmelzklebstoffs gegeben ist. Die Menge der Copolymere kann, jeweils bezogen auf die Gesamtmenge des erfindungsgemäß verwendbaren Schmelzklebstoffs, 0,1 bis 20 Gew.-% betragen, insbesondere können 0,5 bis 10 Gew.-% mindestens eines thermoplastischen Elastomeren enthalten sein.

Gegebenenfalls können dem erfindungsgemäß verwendbaren Schmelzklebstoff Wachse, in Mengen von 0 bis 30 Gew.-%, bevorzugt in Mengen von 5 bis 20 Gew.-%, jeweils bezogen auf die Gesamtmenge des Schmelzklebstoffs, zugegeben werden. Die Menge ist dabei so bemessen, dass einerseits die Viskosität auf den gewünschten Bereich abgesenkt wird, andererseits aber die Adhäsion nicht negativ beeinflusst wird. Das Wachs kann natürlichen, ggf. auch in chemisch modifizierter Form, oder synthetischen Ursprungs sein. Als natürliche Wachse können pflanzliche Wachse, tierische Wachse eingesetzt werden, auch Mineralwachse oder petrochemische Wachse. Als chemisch modifizierte Wachse können Hartwachse wie Montanesterwachse, Sasolwachse usw. eingesetzt werden. Als synthetische Wachse finden Polyalkylenwachse sowie Polyethylenglykolwachse Verwendung. Vorzugsweise werden petrochemische Wachse wie Petrolatum, Paraffinwachse, mikrokristalline Wachse sowie synthetische Wachse eingesetzt.

Weichmacher werden vorzugsweise zum Einstellen der Viskosität oder der Flexibilität verwendet und sind in dem erfindungsgemäß verwendbaren Schmelzklebstoff im allgemeinen in einer Menge von 0 bis 20 Gew.-%, vorzugsweise in einer Menge von 0,1 bis 10 Gew.-%, jeweils bezogen auf die Gesamtmenge des Schmelzklebstoffs enthalten. Geeignete Weichmacher sind medizinische Weißöle, naphtenische Mineralöle, Polypropylen-, Polybuten-, Polyisobutylen, Polyisopren-Oligomere, hydrierte Polyisopren- und/oder Polybutadien-Oligomere, Benzoatester, Phthalate, Adipate, pflanzliche oder tierische Öle und deren Derivate. Hydrierte Weichmacher werden beispielsweise ausgewählt aus der Gruppe der paraffinischen Kohlenwasserstofföle. Auch Polypropylenglykol und Polybutylenglykol, sowie Polymethylenglykol sind geeignet. Ggf. werden auch Ester als Weichmacher eingesetzt, z. B. flüssige Polyester und Glycerinester oder Weichmacher auf Basis aromatischer Dicarbonsäureester.

Die Stabilisatoren haben die Aufgabe den Schmelzklebstoff während der Herstellung, der Verarbeitung sowie nachfolgend bei der entsprechenden Verwendung vor Zersetzung zu schützen. Hier sind insbesondere die Antioxidantien zu nennen oder auch Lichtschutzmittel. Sie werden üblicherweise in Mengen von bis zu 3 Gew.-%, vorzugsweise in Mengen von etwa 0,1 bis 1,0 Gew.-%, jeweils bezogen auf die Gesamtmenge des Schmelzklebstoffs, dem Schmelzklebstoff beigefügt. Zu den geeigneten Stabilisatoren gehören vorzugsweise gehinderte Phenole und/oder multifunktionelle Phenole, wie etwa Schwefel- und/oder phosphorhaltige Phenole. Unter gehinderten Phenolen sind insbesondere Verbindungen zu verstehen, in denen mindestens eine sterisch anspruchsvolle Gruppe, wie etwa eine tert-Butylgruppe, mit dem Phenol verknüpft ist, wobei sich die sterisch anspruchsvolle Gruppe insbesondere in ortho- und/oder para-Stellung zur phenolischen OH-Gruppe befindet.

Darüber hinaus kann der erfindungsgemäß verwendbare Schmelzklebstoff Haftvermittler enthalten. Haftvermittler sind Stoffe, welche die Adhäsion des Schmelzklebstoffs zu dem zu verklebenden Substrat verbessern. Insbesondere sollen Haftvermittler das Alterungsverhalten von Klebungen unter Einfluss von feuchter Atmosphäre verbessern. Typische Haftvermittler sind zum Beispiel Ethylen/Acrylamid-Comonomere, polymere Isocyanate, reaktive siliciumorganische Verbindungen oder Phosphorderivate mit Maleinsäure-Anhydrid modifizierte Polymere sowie Polyacrylate. Ebenso können die Benetzungseigenschaften des Klebstoffs auf den Substraten beeinflusst werden.

Die Additive, wie Weichmacher, Stabilisatoren oder Haftvermittler sind dem Fachmann bekannt. Es sind kommerzielle Produkte und der Fachmann kann sie entsprechend den gewünschten Eigenschaften auswählen. Dabei ist darauf zu achten, dass eine Verträglichkeit mit der Polymermischung gegeben ist. Selbstverständlich können im Rahmen der vorliegenden Erfindungen Mischungen aus verschiedenen Weichmacher, Mischungen aus verschiedenen Stabilisatoren und/oder Mischungen aus verschiedenen Haftvermittlern eingesetzt werden.

Die erfindungsgemäß geeigneten Schmelzklebstoffe weisen eine Schmelzviskosität auf, die auf die Anwendungsart abgestimmt ist. Dabei besitzen die genannten Schmelzklebstoffe vorzugsweise eine Schmelzviskosität (200°C) von 100 mPa·s bis 200000 mPa s, besonders bevorzugt von 1000 mPa·s bis 100000 mPa·s und insbesondere von 3000 mPa·s bis 15000 mPa·s bei Verkleben von großen Flächen oder von 10000 bis 40000 mPa·s bei Verkleben von schmaleren Flächen und Kanten.

Die Schmelzviskosität wird dabei wie oben beschrieben bestimmt.

Erfindungsgemäß geeignete Schmelzklebstoffe weisen darüber hinaus vorzugsweise eine Wärmestandsfestigkeit von mindestens 100°C, besonders bevorzugt von mindestens 110°C und überaus bevorzugt von mindestens 115°C auf, wobei die Wärmestandsfestigkeit wie folgt bestimmt wird:
Zwei Blatt Silikonpapier werden mit 15 g Schmelzklebstoff versehen und mit einer Labor-Plattenpresse Typ 200E der Firma Dr. Collin GmbH bei 20 bar für 6 sec unter Verwendung von zwei 0,2 mm starken Abstandhaltern miteinander verpresst. Aus der verpressten Folienanordnung, in der sich eine Schmelzklebstoffschicht zwischen den beiden Silikonpapierblättern befindet, werden zehn 2 cm × 2 cm-Prüfquadrate ausgeschnitten. Nach Entfernen der Silikonfolie auf einer Seite des Prüfquadrats wird dieses auf ein für 30 min bei 50°C vorbehandeltes Prüfkörperteil A (100 mm × 20 mm × 1,5 mm, schichtverleimtes Buchenholz) gedrückt. Nach Entfernen der zweiten Silikonfolie wird das Prüfkörperteil A im Umluftofen für 1 min auf 200°C erwärmt, wodurch der auf dem Prüfkorperteil befindliche Schmelzklebstoff aktiviert wird. Ein für 1 min bei 200°C vorbehandeltes Prüfkörperteil B (100 mm × 20 mm × 3,0 mm, schichtverleimtes Buchenholz) wird anschließend direkt senkrecht auf das Prüfkörperteil A gesetzt (in den aktivierten Schmelzklebstoff) und mittels eines 4 kg-Gewichtsstücks bis zum Erkalten (ca. 5 min) des aktivierten Schmelzklebstoffs verpresst, so dass ein T-förmiger Prüfköper entsteht, der aus dem Prüfkörperteil A und B besteht.

Jeweils 10 dieser T-förmiger Prüfköper werden senkrecht aufgehangen und mit einem 400 g Gewicht belastet. Die Temperatur wird anschließend nach jeweils einer Stunde immer in 5°C Schritten erhöht. Fallen bei einer Temperatur innerhalb einer Stunde mindestens 7 der 10 T-förmigen Prüfköper auseinander, so wird als Wärmestandfestigkeit diese Temperatur minus 5°C angegeben.

Die erfindungsgemäß verwendbaren Schmelzklebstoffe können nach bekannten Verfahren hergestellt werden. Dabei ist es möglich, die Ausgangsmaterialien aufzuschmelzen und danach in an sich bekannten Rühraggregaten zu mischen. Der Fachmann kann eine geeignete Reihenfolge der Zugabe der einzelnen Bestandteile leicht ermitteln. Eine andere bevorzugte Ausführungsform mischt die Bestandteile in einem Extruder. Dabei werden im Allgemeinen die schlechter schmelzbaren Polymerbestandteile zuerst eingesetzt und in diese gemischten Bestandteile in der weiteren Verarbeitung am Extruder die weiteren Additive zugesetzt.

Ein bevorzugter erfindungsgemäß verwendbarer Schmelzklebstoff weist eine Shore D Härte von über 50 auf und umfasst insbesondere die folgenden Komponenten:

| | |
|---|---|
| - 30 bis 60 Gew.-% | mindestens eines thermomechanisch degradierten Polypropylencopolymeren, |
| - 10 bis 50 Gew.-% | mindestens eines klebrigmachenden Harzes, |
| - 0 bis 20 Gew.-% | mindestens eines weiteren Additivs, |

Ein anderer bevorzugter erfindungsgemäß verwendbarer Schmelzklebstoff weist eine Shore D Härte von über 51 auf und umfasst insbesondere die folgenden Komponenten:

| | |
|---|---|
| - 30 bis 60 Gew.-% | mindestens eines thermomechanisch degradierten Polypropylencopolymeren, |
| - 10 bis 50 Gew.-% | mindestens eines klebrigmachenden Harzes, |
| - 0,1 bis 20 Gew.-% | mindestens eines weiteren Additivs. |

Ein weiterer bevorzugter erfindungsgemäß verwendbarer Schmelzklebstoff weist eine Shore D Härte von über 60 auf und umfasst insbesondere die folgenden Komponenten:

| | |
|---|---|
| - 30 bis 60 Gew.-% | mindestens eines thermomechanisch degradierten Polypropylencopolymeren, |
| - 10 bis 50 Gew.-% | mindestens eines klebrigmachenden Harzes, |
| - 0,1 bis 20 Gew.-% | mindestens eines weiteren Additivs. |

Für die Optimierung der mechanischen Eigenschaften und Applikationseigenschaften kann der erfindungsgemäß verwendete Schmelzklebstoff als Additiv weiterhin einen oder mehrere Füllstoff enthalten. Als Füllstoffe sind geeignet anorganische und organische Füllstoffe, zum Beispiel natürliche, gemahlene oder gefällte Calciumcarbonate, Baryt (BaSO₄, auch Schwerspat genannt), calcinierte Kaoline, Kieselsäuren, insbesondere hochdisperse Kieselsäuren aus Pyrolyseprozessen, Russe, insbesondere industriell hergestellte Russe, PVC-Pulver oder Hohlkugeln, sowie flammhemmende Füllstoffe wie Hydrate oder Hydroxide, insbesondere Aluminiumhydroxid und Aluminiumoxid-Trihydrat. Bevorzugte Füllstoffe sind Calciumcarbonate, Russe und kalzinierte Kaoline.

Aufgrund der besonderen Eigenschaften der thermomechanisch degradierten Polypropylencopolymere ist es möglich, dass der erfindungsgemäß verwendbare Schmelzklebstoff nur geringe Anteile an Füllstoffen aufweist, oder im Wesentlichen frei bzw. vollkommen frei von Füllstoffen ist, ohne dass sich die mechanischen Eigenschaften und Applikationseigenschaften des Schmelzklebstoffs wesentlich verschlechtern.

Unter im "Wesentlichen frei von Füllstoffen" wird im Sinne der vorliegenden Erfindung verstanden, dass der Schmelzklebstoff weniger als 10 Gew.-%, vorzugsweise weniger als 5 Gew.-%, besonders bevorzugt weniger als 1 Gew.-% und überaus bevorzugt weniger als 0,1 Gew.-% an Pigmenten und/oder Füllstoffen enthält.

Gegenstand der vorliegenden Erfindung ist weiterhin eine Metall-, Papier- und/oder Kunststofffolie, die mindestens eine Klebstoffschicht eines erfindungsgemäß verwendbaren Schmelzklebstoffs umfasst. Die oben im Rahmen der Verwendung des Schmelzklebstoffs offenbarten (bevorzugten) Ausführungsformen des Schmelzklebstoffs gelten in analoger Weise auch für die Metall-, Papier- und/oder Kunststofffolie als weiteren Gegenstand der vorliegenden Erfindung.

Bevorzugte Metall-, Papier- und/oder Kunststofffolien der vorliegenden Erfindung umfassen mindestens eine Klebstoffschicht eines erfindungsgemäß verwendbaren Schmelzkelbstoffs, wobei der genannte Schmelzklebstoff eine Kombinationen von mindestens zwei unterschiedlichen thermomechanisch degradierten Polypropylencopolymeren umfasst, wobei
- mindestens ein thermomechanisch degradiertes Polypropylencopolymer eine Schmelzenthalpie von 5 J/g bis 40 J/g, besonders bevorzugt von 8 J/g bis 30 J/g und/oder
- mindestens ein weiteres thermomechanisch degradiertes Polypropylencopolymer eine Schmelzenthalpie von 60 J/g bis 100 J/g, besonders bevorzugt von 62 J/g bis 90 J/g aufweist.

Im Sinne der vorliegenden Erfindung geeignete Metall-, Papier- und/oder Kunststofffolien sind vorzugsweise bahnenförmige, flexible Folien, die mit weiteren im Allgemeinen festen, flächigen Substraten verklebt werden können. Es kann sich dabei um Einschicht- oder Mehrschichtfolien handeln. Diese können gegebenenfalls auf einer Seite bedruckt oder lackiert sein. Solche Folien werden beispielsweise als Dekorfolien, so genannten Finishfolien, in der Möbelindustrie zum Kaschieren von festen Holz-, Kunststoff- oder Metallformteilen eingesetzt. Insbesondere sind im Sinne der vorliegenden Erfindung Papier- und/oder Kunststofffolien, die mindestens eine Klebstoffschicht eines erfindungsgemäß verwendbaren Schmelzklebstoffs umfassen, bevorzugt.

Erfindungsgemäß können die Metall-, Papier- und/oder Kunststofffolien auf einer Seite eine Schicht eines erfindungsgemäß verwendbaren Schmelzklebstoffs aufweisen. Die Klebstoffschicht kann nach bekannten Verfahren aufgetragen werden, beispielsweise durch Rakeln, Gießen, Breitschlitzdüsen, Walzen oder ähnlichen Verfahren.

In einer Ausführungsform der Erfindung weist die Metall-, Papier- und/oder Kunststofffolie eine Schicht des erfindungsgemäß verwendbaren Schmelzklebstoffs mit einer Dicke von 10 µm bis 100 µm auf, wobei die genannte Folie insbesondere einseitig beschichtet ist.

Vorzugsweise ist die beschichtete Metall-, Papier- und/oder Kunststofffolie der vorliegenden Erfindung lagerstabil, dass heißt, eine entsprechende Folie kann ohne Verlust der späteren Verklebungseigenschaften gelagert werden. Dabei wird sie beispielsweise durch Aufrollen in eine geeignete Form überführt. Dafür ist es notwendig, dass die auf der genannten Folie befindliche Schicht des erfindungsgemäß verwendbaren Schmelzklebstoffs blockfest ist.

Unter blockfest wird im Sinne der vorliegenden Erfindung verstanden, dass die Oberfläche der Klebstoffschicht mit einer weiteren nicht beschichteten Seite der Metall-, Papier- und/oder Kunststofffolie unter Lagerbedingungen nicht verklebt.

Die genannte Folie kann vor Gebrauch durch leichten Zug von der Oberfläche getrennt werden, ohne dass die unbeschichtete Seite der Metall-, Papier- und/oder Kunststofffolie verunreinigt bzw. beschädigt wird.

Als Test zur Bestimmung der Blockfestigkeit werden einseitig beschichtete Kunststofffolien aus PVC (Stärke 50 µm) mit einer Schicht eines erfindungsgemäßen Schmelzklebstoffs (30 µm) versehen und auf 25°C abgekühlt. Es wird ein Stapel von 10 beschichteten Kunststofffolien (10x10 cm) gebildet, wobei jeweils eine beschichtete Oberfläche zu einer nicht beschichteten Folienseite orientiert ist. Dieser Stapel wird mit einem flächigen Gewicht von 1 kg belastet. Nach 24 Stunden bei 25°C wird das Gewicht entfernt. Unter Blockfest wird verstanden, wenn die Folien durch leichten Zug mit einer Kraft von 2 N voneinander zu trennen sind.

Die erfindungsgemäßen Metall-, Papier- und/oder Kunststofffolien können nach der Lagerung weiter verarbeitet werden, wobei deren beschichtete Seite mit einem weiteren Substrat, beispielsweise eine Oberfläche eines Holzformkörpers, verklebt wird. Dabei wird die Klebstoffschicht durch Erwärmen der Metall-, Papier- und/oder Kunststofffolie der vorliegenden Erfindung aktiviert. In diesem aktivierten Zustand kann eine Verklebung unter Druck erfolgen.

Gegenstand der vorliegenden Erfindung ist weiterhin ein Verfahren zum Verkleben einer Metall-, Papier- und/oder Kunststofffolie auf einem Substrat, umfassend die Schritte:
a) Aufragen eines erfindungsgemäß verwendbaren Schmelzklebstoffs auf einer Metall-, Papier- und/oder Kunststofffolie, so dass eine mit einem Schmelzklebstoff einseitig beschichtete Folie entsteht;
b) Zusammenführen der beschichteten Folienseite und eines Substrats und anschließende Verklebung der beschichteten Folien mit dem Substrat, wobei die Verklebung unter gleichzeitiger Anwendung von Druck und Temperatur durchgeführt wird. Die oben im Rahmen der Verwendung des Schmelzklebstoffs offenbarten (bevorzugten) Ausführungsformen des Schmelzklebstoffs gelten in analoger Weise auch für das oben beschriebene Verfahren als weiteren Gegenstand der vorliegenden Erfindung.

In einer bevorzugten Ausführungsform des erfindungsgemäßen Verfahrens wird in Schritt
a) ein erfindungsgemäß verwendbarer Schmelzklebstoff aufgetragen, der eine Kombinationen von mindestens zwei unterschiedlichen thermomechanisch degradierten Polypropylencopolymeren umfasst, wobei
   - mindestens ein thermomechanisch degradiertes Polypropylencopolymer eine Schmelzenthalpie von 5 J/g bis 40 J/g, besonders bevorzugt von 8 J/g bis 30 J/g und/oder
   - mindestens ein weiteres thermomechanisch degradiertes Polypropylencopolymer eine Schmelzenthalpie von 60 J/g bis 100 J/g, besonders bevorzugt von 62 J/g bis 90 J/g aufweist.

Das Zusammenführen in Schritt b) des erfindungsgemäßen Verfahrens kann beispielsweise durch Walzen, Gleitschuhe, geformten Werkzeugen oder durch Pressen erfolgen. Solche Verklebungsverfahren sind im Prinzip bekannt. Eine Vorrichtung zum Durchführen des erfindungsgemäßen Verfahrens ist beispielsweise aus der EP 2191947 A1 bekannt.

Erfindungsgemäß ist es notwendig, dass der erfindungsgemäß verwendbare Schmelzklebstoff auf die Oberfläche der Metall-, Papier- und/oder Kunststofffolie aufgebracht wird. Das Aufbringen wird üblicherweise bei erhöhten Temperaturen durchgeführt, beispielsweise bei Temperaturen oberhalb von 150°C. Der Schmelzklebstoff schmilzt bei den genannten Temperaturen auf und kann dann durch bekannte Vorrichtungen auf die Metall-, Papier- und/oder Kunststofffolie aufgebracht werden. Gemäß dem vorliegenden Verfahren ist es insbesondere vorteilhaft, dass der erfindungsgemäß verwendbare Schmelzklebstoff in einer Schichtdicke von 10 µm bis 100 µm, insbesondere von 15 bis 70 µm aufgetragen wird.

Die so beschichtete Metall-, Papier- und/oder Kunststofffolie wird anschließend mit dem Substrat verklebt. Dabei kann zwischen dem Auftragen des Klebstoffs und dem Verkleben auch eine Lagerzeit liegen. Da ein erfindungsgemäß geeigneter Schmelzklebstoff bei 25°C vorzugsweise eine nicht klebende Oberfläche aufweist, ist es insbesondere vorteilhaft, dass unmittelbar vor dem Verklebungsschritt die Klebstoffschicht erwärmt wird. Das kann beispielsweise durch Erwärmen durch heiße Luft, durch Strahlungswärme, wie etwa IR-Strahlung oder durch Erwärmen mit einer beheizten Walze durchgeführt werden.

Das Erwärmen erfolgt dabei vorzugsweise von der nicht-beschichteten Seite der Metall-, Papier- und/oder Kunststofffolie aus.

In einer weiteren Ausführungsform der Erfindung wird der erfindungsgemäß verwendbare Schmelzklebstoff oberhalb seines Erweichungspunktes unmittelbar vor dem Zusammenführen von Metall-, Papier- und/oder Kunststofffolie mit dem Substrat auf die Folienoberfläche aufgetragen. Da der erfindungsgemäß verwendbare Schmelzklebstoff insbesondere nur eine kurze offene Zeit aufweist, ist es auch in dieser Ausführungsform vorteilhaft, dass die Schmelzklebstoffschicht unmittelbar vor dem Zusammenfügen und/oder bei dem Zusammenfügen erwärmt wird.

Die Verklebung der beschichteten Metall-, Papier- und/oder Kunststofffolie mit dem Substrat wird, wie oben beschrieben, unter gleichzeitiger Anwendung von Druck und Temperatur durchgeführt.

Unter gleichzeitiger Anwendung von Druck und Temperatur wird im Rahmen der vorliegenden Erfindung verstanden, dass auf die beschichtete Metall-, Papier- und/oder Kunststofffolie bei mindestens 60°C ein Druck von mindestens 1,5 bar ausgeübt wird. Insbesondere wird die beschichtete Folienseite der Metall-, Papier- und/oder Kunststofffolie auf Temperaturen von 100°C bis 200°C, besonders bevorzugt auf Temperaturen von120°C bis 150°C erwärmt. Es ist darauf zu achten, dass die Erwärmungstemperatur so gewählt wird, dass die beschichtete Metall-, Papier- und/oder Kunststofffolie und/oder das Substrat durch die Temperatur nicht geschädigt wird. Insbesondere ist es zweckmäßig, die Klebstoffschicht auf eine Temperatur zu erwärmen, die ungefähr dem Bereich des Erweichungspunkts des erfindungsgemäß verwendbaren Schmelzklebstoffs entspricht oder oberhalb des Erweichungspunktes liegt.

In einer besonderen Ausführungsform des erfindungsgemäßen Verfahrens kann die beschichtete Folienseite der Metall-, Papier- und/oder Kunststofffolie auch auf Temperaturen zwischen 5°C unterhalb des Erweichungspunktes bis 30°C oberhalb der Erweichungspunktes des Schmelzklebstoffs der vorliegenden Erfindung erwärmt werden.

Durch die Verwendung einer dünnen Metall-, Papier- und/oder Kunststofffolie mit einer Schichtdicke von weniger als 150 µm, welche mit einer dünnen Schicht des erfindungsgemäß verwendbaren Schmelzklebstoffs von weniger als 100 µm beschichtet ist, kann eine schnelle Erwärmung der Schmelzklebstoffschicht erreicht werden. Somit ist es möglich, dass die Erwärmung unmittelbar vor dem Zusammenführen oder während des Zusammenführens von beschichteter Metall-, Papier- und/oder Kunststofffolie und Substrat durchgeführt wird.

Ein Vorteil der erfindungsgemäßen Arbeitsweise liegt darin, dass ein Schmelzklebstoff gemäß der vorliegenden Erfindung ausgewählt wird. Dieser zeigt bei Auftragstemperatur eine niedrige Viskosität und kann in dünnen Schichtstärken auf die Metall-, Papier- und/oder Kunststofffolie aufgetragen werden. Weiterhin zeichnet sich der erfindungsgemäß verwendbare Schmelzklebstoff durch einen schnellen Haftungsaufbau beim Abkühlen aus. Damit ist sichergestellt, dass unmittelbar nach dem Beenden der Erwärmung die Schmelzklebstoffschicht abkühlt und unmittelbar danach die Haftung aufbaut, so dass eine schnelle Weiterverarbeitung möglich ist.

Die im erfindungsgemäßen Verfahren verwendeten Substrate sind insbesondere flächige Substrate, welche vorzugsweise ausgewählt werden aus Holz-, Metall- oder Kunststoffformkörpern, wie beispielsweise Holzbauteilen für die Möbelindustrie.

### Beispiele

### 0. Messmethoden

Die in den Beispielen angegebene Shore D Härten, Schmelzenthalpien, Schmelzviskositäten und Wärmestandsfestigkeiten wurden gemäß den oben beschriebenen Methoden bestimmt.

Die Adhäsionseigenschaften der Schmelzklebstoffe wurden wie folgt bestimmt:
a) Herstellung der Prüfkörper
   Der jeweilige Schmelzklebstoff wurde bei 200°C geschmolzen und mittels eines Kastenziehrakels (Hersteller Fa. Erichsen) mit einer Filmstärke von 40 µm auf eine Dekorfinishfolie (Hersteller: Dai Nippon, Foliengewicht 40 g/m²) appliziert. Die so vorbeschichtete Dekorfinishfolie wurde mittels einer Labor-Platten-Presse des Typs 200E (Hersteller Firma Dr. Collin GmbH) reaktiviert und auf eine 10 cm × 20 cm große Spanplatte (Stärke 19 mm) bei einer Plattentemperatur von 135°C und einem eingestellten Pressdruck von 20 bar bei einer Presszeit von 2 Sekunden geklebt. Die erhaltenen Prüfköper wurden anschließend bei 23°C bei einer relativen Luftfeuchtigkeit von 65% für mindestens 24 Stunden gelagert.
b) Adhäsionsprüfung:
   Nach Fixierung der Prüfkörper wurde mit einem geeigneten Messer mittig in die Klebefuge geschnitten, so dass ein parallel zur Oberfläche der Spanplatte verlaufender Schnitt entstand. Das noch in der Klebefuge befindliche Messer wurde dann gleichmäßig angehoben und der Klebebruch nach folgendem Schema bewertet, wobei die Note 1 für die beste und die Note 5 für die schlechteste Adhäsion steht:
   Note 1-2: Vollflächiger Ausriss aus Spanplatte und / oder sehr hohe Festigkeit der Verklebung;
   Note 2: Vollflächige Benetzung der Folie (Kohäsionsbruch) und / oder deutlicher Ausriss aus der Spanplatte;
   Note 2-3: Vollflächige Benetzung der Folie (Kohäsionsbruch) und / oder geringe Verklebungsfestigkeit;
   Note 3: Geringes Abplatzen der Folie vom Schmelzklebstofffilm (bis 1 mm tief);
   Note 4: Deutliches Abplatzen der Folie vom Schmelzklebstofflilm (bis 1 cm tief);
   Note 5: Vollflächiges Abplatzen der Folie vom Schmelzklebstofflilm.

### I. Verwendete Substanzen

Es wurden die folgenden Substanzen verwendet:

| Substanz | Beschreibung |
|---|---|
| Polypropylencopolymer 1 | C3/C2/C4-Copolymer (Schmelzviskosität bei 200°C von 4950000 mPa s) |
| Polypropylencopolymer 2 | Semikristallines C3/C2-Copolymer (Schmelzviskosität bei 200°C von 2700000 mPa·s) |
| Sabic 578 N | Polypropylenhomopolymer, Sabic |
| Borseal RE909CF | C3/C2-Copolymer, Borealis |
| Borseal RE239CF | C3/C2-Copolymer, Borealis |
| Vistamaxx 6202 | C3/C2-Copolymer, Exxon |
| Escorene UL 05540 | EVA, Ethylen-Vinylacetat-Coploymer, Exxon |
| Vestoplast 750 | APAO, Ethylen-Proyplen-Butylen Terpolymer, Evonik |
| Vestoplast 703 | APAO, Ethylen-Proyplen-Butylen Terpolymer, Evonik |
| Licocene PP 2602 | C3/C2-Polypropylencopolymer, Clariant |
| Escorez 5400 | Hydriertes Polycyclopentadienharz; klebrigmachendes Harz; Exxon |
| Epolene E 43 | Modifiziertes Poypropylen-Wachs, Westlake Chemical Corporation |
| Novares TN 150 | Aromatisches Kohlenwasserstoffharz; klebrigmachendes Harz; RÜTGERS Novares GmbH |
| Sylvares TP 2040 HME | Terpen-Phenol-Harz, klebrigmachendes Harz, Arizona Chemical |
| Sasolwax H1 | Fischer-Tropsch-Wachs, Sasol |
| Irganox 1010 | Antioxidant; BASF SE |

### II. Thermomechanische Degradierung

a) Thermomechanische Degradierung einer Mischung zweier Polypropylencopolymere Zu einer Mischung aus 70 Gew.-% eines Polypropylencopolymers 1 und 30 Gew.-% eines Polypropylencopolymers 2 wurde Trigonox 301 (Peroxid als Radikalbildner) in einer Menge von 1,2 Gew.-%, basierend auf der Gesamtmenge der Polymere, zugesetzt. Die resultierende Mischung wurde in einem Doppelschneckenextruder (ZSK 25/40D; Werner&Pfleiderer) unter Scherbeanspruchung einer Temperatur von 220°C ausgesetzt, wodurch eine Mischung zweier thermomechanisch degradierter Polypropylencopolymere (TDCoP) erhalten wurde, wobei die Mischung eine Schmelzviskosität (200°C) von 18300 mPa·s aufwies.
b) Herstellung von Sabic 578 N.deg
   Zu Sabic 578N wurde Trigonox 301 (Peroxid als Radikalbildner) in einer Menge von 0,26 Gew.-%, basierend auf der Gesamtmenge des Polymers, zugesetzt. Die resultierende Mischung wurde in einem Doppelschneckenextruder (ZSK 25/40D; Werner&Pfleiderer) bei einer Rotationsgeschwindigkeit von 500 U/min unter Scherbeanspruchung einer Temperatur von 280°C ausgesetzt, wodurch thermomechanisch degradiertes Sabic 578 N (Sabic 578 N. deg) erhalten wurde, das eine Schmelzviskosität (200°C) von 17400 mPa·s aufwies.
c) Herstellung von Borseal RE909CF
   Zu Borseal RE909CF wurde Trigonox 301 (Peroxid als Radikalbildner) in einer Menge von 0,34 Gew.-%, basierend auf der Gesamtmenge des Polymers, zugesetzt. Die resultierende Mischung wurde in einem Doppelschneckenextruder (ZSK 25/40D; Werner&Pfleiderer) bei einer Rotationsgeschwindigkeit von 500 U/min unter Scherbeanspruchung einer Temperatur von 282°C ausgesetzt, wodurch thermomechanisch degradiertes Borseal RE909CF (Borseal RE909CF. deg) erhalten wurde, das eine Schmelzviskosität (200°C) von 15300 mPa·s aufwies.
d) Herstellung von Borseal RE239CF.deg
   Zu Borseal RE239CF wurde Trigonox 301 (Peroxid als Radikalbildner) in einer Menge von 0,37 Gew.-%, basierend auf der Gesamtmenge des Polymers, zugesetzt. Die resultierende Mischung wurde in einem Doppelschneckenextruder (ZSK 25/40D; Werner&Pfleiderer) bei einer Rotationsgeschwindigkeit von 500 U/min unter Scherbeanspruchung einer Temperatur von 280°C ausgesetzt, wodurch thermomechanisch degradiertes Borseal RE239CF (Borseal RE239CF. deg) erhalten wurde, das eine Schmelzviskosität (200°C) von 15300 mPa·s aufwies.
e) Herstellung von Vistamaxx 6202.deg
   Zu Vistamaxx 6202 wurde Trigonox 301 (Peroxid als Radikalbildner) in einer Menge von 0,35 Gew.-%, basierend auf der Gesamtmenge des Polymers, zugesetzt. Die resultierende Mischung wurde in einem Doppelschneckenextruder (ZSK 25/40D; Werner&Pfleiderer) bei einer Rotationsgeschwindigkeit von 500 U/min unter Scherbeanspruchung einer Temperatur von 280°C ausgesetzt, wodurch thermomechanisch degradiertes Vistamaxx 6202 (Vistamaxx 6202.deg) erhalten wurde, das eine Schmelzviskosität (200°C) von 18500 mPa·s aufwies.

### III. Herstellung und Eigenschaften von Schmelzklebstoffen

Die im Folgenden jeweils angegebenen Substanzen wurden in einer geeigneten Vorrichtung vermengt, so dass jeweils ein Schmelzklebstoff erhalten wurde. Die angegebenen prozentualen Mengenangaben beziehen sich jeweils auf die Gesamtmenge des Schmelzklebstoffs.

Beispiel 1: Schmelzklebstoff der vorliegenden Erfindung auf Basis von TDCoP

| Substanz | Formulierun 9 [Gew.-%] | Härte [Shore D] | Wärmestandsfestigkeit [°C] | Schmelzvi skosität [Pa·s] | Adhäsion |
|---|---|---|---|---|---|
| TDCoP | 66,5 | 55 | 120 | 9,5 | (1-2) |
| Escorez 5400 | 28 | | | | |
| Epolene E 43 | 5,0 | | | | |
| Irganox 1010 | 0,5 | | | | |

Beispiel 2: Schmelzklebstoff der vorliegenden Erfindung auf Basis von Borseal RE239CF.deg und Vistamaxx 6202.deg

| Substanz | Schmelzenthalpie [J/g] | Formulie rung [Gew.-%] | Härte [Shore D] | Wärmesta ndsfestigkeit [°C] | Schmelzviskosität [Pa·s] | Adhäsi on |
|---|---|---|---|---|---|---|
| Borseal RE239CF.deg | 61 | 46,6 | 51 | 125°C | 8,3 | (2) |
| Vistamaxx 6202.deg | 33 | 19,9 | | | | |
| Escorez 5400 | | 28 | | | | |
| Epolene E 43 | | 5,0 | | | | |
| Irganox 1010 | | 0,5 | | | | |

Beispiel 3: Schmelzklebstoff der vorliegenden Erfindung auf Basis von Borseal RE909CF.deg

| Substanz | Formulierung [Gew.-%] | Härte [Shore D] | Wärmestandsfestigkeit [°C] | Schmelzviskosität [Pa·s] | Adhäsion |
|---|---|---|---|---|---|
| Borseal RE909CF.deg | 66,5 | 62 | 120°C | 7,3 | (1-2) |
| Escorez 5400 | 28 | | | | |
| Epolene E 43 | 5,0 | | | | |
| Irganox 1010 | 0,5 | | | | |

Vergleichsbeispiel 1: Schmelzklebstoff auf Basis eines degradierten Polypropylenhomopolymers

| Substanz | Formulierung [Gew.-%] | Härte [Shore D] | Wärmestandsfestigkeit [°C] | Schmelzviskosität [Pa·s] | Adhäsion |
|---|---|---|---|---|---|
| Sabic 578 N.deg | 66,5 | 78 | 155°C | 4,8 | (5) |
| Escorez 5400 | 28 | | | | |
| Epolene E 43 | 5,0 | | | | |
| Irganox 1010 | 0,5 | | | | |

Vergleichsbeispiel 2: EVA-basierter Schmelzklebstoff

| Substanz | Formulierung [Gew.-%] | Härte [Shore D] | Wärmestandsfestigkei t [°C] | Schmelzviskosität [Pa·s] |
|---|---|---|---|---|
| Novares TN 150 | 50 | 50 | 75 | 3,0 |
| Sylvares TP 2040 HME | 10 | | | |
| Escorene UL 05540 | 30 | | | |
| Sasolwax H1 | 10 | | | |
| Irganox 1010 | 0,1 | | | |

Vergleichsbeispiel 3: APAO-basierter Schmelzklebstoff

| Substanz | Formulierung [Gew.-%] | Härte [Shore D] | Wärmestandfestigkeit [°C] | Schmelzviskosität [Pa·s] |
|---|---|---|---|---|
| Vestoplast 750 | 34,0 | 28 | 100 | 9 |
| Vestoplast 703 | 34,0 | | | |
| Escorez 5300 | 26,5 | | | |
| Irganox 1010 | 0,5 | | | |
| Epolene E43 | 5,0 | | | |

Vergleichsbeispiel 4: C3/C2-Polypropylencopolymer (undegradiert)-basierter Schmelzklebstoff

| Substanz | Formulierung [Gew.-%] | Härte [Shore D] | Wärmestandfestigkeit [°C] | Schmelzviskosität [Pa·s] |
|---|---|---|---|---|
| Licocene PP 2602 | 69,5 | 37 | 60 | 1 |
| Escorez 5400 | 30,0 | | | |
| Irganox 1010 | 0,5 | | | |

Die Beispiele 1 und 2 zeigen, dass mit Schmelzklebstoffen, die Mischungen aus zwei thermomechanisch abgebauten Polypropylencopolymeren enthalten, eine effektive Verklebung einer Dekorfolie auf einer Spanplattenoberfläche erreicht wurde. Die Schmelzklebstoffe zeichneten sich weiterhin durch eine hohe Shore D Härte und sehr gute Wärmestandsfestigkeit aus.

Auch der in Beispiel 3 offenbarte Schmelzklebstoff, der nur ein thermomechanisch degradiertes Polypropylencopolymer umfasst, zeigte eine hohe Härte und gute Klebeeigenschaften bei der Verklebung einer Dekorfinishfolie mit einem Foliengewicht von 40 g/m². Bei der Verklebung von vergleichbaren Dekorfinishfolien mit einem höheren Foliengewicht von 90 g/m² war der genannte Schmelzklebstoff allerdings im Hinblick auf seine Adhäsionskraft den Schmelzklebstoffen der Beispiele 1 und 2 unterlegen.

Aus dem Vergleich von Bespiel 3 und Vergleichsbeispiel 1 wird deutlich, dass nur durch die Verwendung von thermomechanisch degradierten Polypropylencopolymeren Schmelzklebstoffe mit guten Klebeeigenschaften erhalten wurden, während die Klebekraft von Schmelzklebstoffen auf Basis von Polypropylenhomopolymeren unzureichend war.

EVA-basierte Schmelzklebstoffe (Vergleichsbeispiel 2) zeigten eine unzureichende Wärmestandsfestigkeit (< 100°C), während APAO-basierte Schmelzklebstoffe (Vergleichsbeispiel 3) eine unzureichende Shore D Härte aufwiesen.

Kommerziell erhältliche niedermolekulare C3/C2 Polypropylencopolymere (Vergleichsbeispiel 4) waren für den erfindungsgemäßen Verwendungszweck ebenfalls nicht geeignet, da deren Shore D Härte und Wärmestandfestigkeit zu niedrig waren.

## Patentansprüche

1. Verwendung eines Schmelzklebstoffs zur Verklebung einer Metall-, Papier- und/oder Kunststofffolie, **dadurch gekennzeichnet, dass** der Schmelzklebstoff die folgenden Komponenten umfasst:
- 10 bis 80 Gew.-% mindestens eines thermomechanisch degradierten Polypropylencopolymeren, wobei das thermomechanisch degradierte Polypropylencopolymer durch thermomechanische Degradierung mindestens eines Polypropylencopolymers unter Scherbeanspruchung, in Gegenwart mindestens eines Radikalbildners, oberhalb des Erweichungspunktes (Ring und Kugel- Methode gemäß ASTM E-28) des Polypropylencopolymers hergestellt wird, wobei die bei 200°C bestimmte Schmelzviskosität (bestimmt unter Verwendung eines Brookfield Thermosel RVT Viskosimeters (erhältlich von Brookfield Engineering Laboratories, Inc., Stoughton, Mass. USA wobei für Viskositäten bis zu 100000 mPa·s wird eine Spindel 27 verwendet wahrend zur Bestimmung von Schmelzviskositäten großer als 100000 mPa·s eine Spindel 29 eingesetzt wird und die Rotationsgeschwindigkeit der jeweiligen Spindel wird so eingestellt, dass bei einer Temperatur von 200° C die Drehmomentwerte des Viskosimeters in einem Bereich von 10 bis 95 % des maximal zulässigen Drehmoments liegen) des thermomechanisch degradierten Polypropylencopolymers weniger als 70% der ebenfalls bei 200°C bestimmten Schmelzviskosität des Polypropylencopolymers beträgt,
- 5 bis 60 Gew.-% mindestens eines klebrigmachenden Harzes,
- 0 bis 40 Gew.-% mindestens eines weiteren Additivs,
wobei der Schmelzklebstoff eine Shore D Härte von über 50 aufweist (DIN EN ISO 868:2003).

2. Verwendung nach Anspruch 1, **dadurch gekennzeichnet, dass** das thermomechanisch degradierte Polypropylencopolymer eine bei 200°C bestimmte Schmelzviskosität von 100 mPa·s bis 200.000 mPa·s aufweist.

3. Verwendung nach mindestens einem der Ansprüche 1 bis 2, **dadurch gekennzeichnet, dass** der Erweichungspunkt des thermomechanisch degradierten Polypropylencopolymers zwischen 80°C und 170°C liegt (ASTM E-28).

4. Verwendung nach mindestens einem der Ansprüche 1 bis 3, **dadurch gekennzeichnet, dass** der Schmelzklebstoff weniger als 10 Gew.-%, vorzugsweise weniger als 5 Gew.-%, besonders bevorzugt weniger als 1 Gew.-% Füllstoffe enthält.

5. Metall-, Papier- und/oder Kunststofffolie, **dadurch gekennzeichnet, dass** die Metall-, Papier- und/oder Kunststofffolie mindestens eine Klebstoffschicht eines Schmelzklebstoffs umfasst, wobei der Schmelzklebstoff die folgenden Komponenten umfasst:
- 10 bis 80 Gew.-% mindestens eines thermomechanisch degradierten Polypropylencopolymeren, wobei das thermomechanisch degradierte Polypropylencopolymer durch thermomechanische Degradierung mindestens eines Polypropylencopolymers unter Scherbeanspruchung, in Gegenwart mindestens eines Radikalbildners, oberhalb des Erweichungspunktes (Ring und Kugel- Methode gemäß ASTM E-28) des Polypropylencopolymers hergestellt wird, wobei die bei 200°C bestimmte Schmelzviskosität (bestimmt unter Verwendung eines Brookfield Thermosel RVT Viskosimeters (erhältlich von Brookfield Engineering Laboratories, Inc., Stoughton, Mass. USA wobei für Viskositäten bis zu 100000 mPa·s wird eine Spindel 27 verwendet wahrend zur Bestimmung von Schmelzviskositäten großer als 100000 mPa·s eine Spindel 29 eingesetzt wird und die Rotationsgeschwindigkeit der jeweiligen Spindel wird so eingestellt, dass bei einer Temperatur von 200° C die Drehmomentwerte des Viskosimeters in einem Bereich von 10 bis 95 % des maximal zulässigen Drehmoments liegen) des thermomechanisch degradierten Polypropylencopolymers weniger als 70% der ebenfalls bei 200°C bestimmten Schmelzviskosität des Polypropylencopolymers beträgt,
- 5 bis 60 Gew.-% mindestens eines klebrigmachenden Harzes,
- 0 bis 40 Gew.-% mindestens eines weiteren Additivs,
und eine Shore D Härte von über 50 aufweist (DIN EN ISO 868:2003).

6. Metall-, Papier- und/oder Kunststofffolie nach Anspruch 5, **dadurch gekennzeichnet, dass** die Klebstoffschicht in der Wärme aktivierbar ist.

7. Metall-, Papier- und/oder Kunststofffolie nach Anspruch 5 oder 6, **dadurch gekennzeichnet, dass** die Metall-, Papier- und/oder Kunststofffolie eine Schicht des Schmelzklebstoffs mit einer Dicke von 10 µm bis 100 µm aufweist.

8. Metall-, Papier- und/oder Kunststofffolie nach mindestens einem der Ansprüche 5 bis 7, **dadurch gekennzeichnet, dass** die Metall-, Papier- und/oder Kunststofffolie eine bedruckte Einschicht- oder Mehrschichtfolie, insbesondere eine Dekorfolie ist.

9. Verfahren zum Verkleben einer Metall-, Papier- und/oder Kunststofffolie auf einem Substrat, umfassend die Schritte:
a) Aufragen eines Schmelzklebstoffs mit einer Shore D Härte von über 50 (DIN EN ISO 868:2003), umfassend:
- 10 bis 80 Gew.-% mindestens eines thermomechanisch degradierten Polypropylencopolymeren, wobei das thermomechanisch degradierte Polypropylencopolymer durch thermomechanische Degradierung mindestens eines Polypropylencopolymers unter Scherbeanspruchung, in Gegenwart mindestens eines Radikalbildners, oberhalb des Erweichungspunktes (Ring und Kugel- Methode gemäß ASTM E-28) des Polypropylencopolymers hergestellt wird, wobei die bei 200°C bestimmte Schmelzviskosität (bestimmt unter Verwendung eines Brookfield Thermosel RVT Viskosimeters (erhältlich von Brookfield Engineering Laboratories, Inc., Stoughton, Mass. USA wobei für Viskositäten bis zu 100000 mPa·s wird eine Spindel 27 verwendet wahrend zur Bestimmung von Schmelzviskositäten großer als 100000 mPa·s eine Spindel 29 eingesetzt wird und die Rotationsgeschwindigkeit der jeweiligen Spindel wird so eingestellt, dass bei einer Temperatur von 200° C die Drehmomentwerte des Viskosimeters in einem Bereich von 10 bis 95 % des maximal zulässigen Drehmoments liegen) des thermomechanisch degradierten Polypropylencopolymers weniger als 70% der ebenfalls bei 200°C bestimmten Schmelzviskosität des Polypropylencopolymers beträgt,
- 5 bis 60 Gew.-% mindestens eines klebrigmachenden Harzes,
- 0 bis 40 Gew.-% weitere Additive,
auf einer Metall-, Papier- und/oder Kunststofffolie, so dass eine mit einem Schmelzklebstoff einseitig beschichtete Folie entsteht;
b) Zusammenführen der beschichteten Folienseite und eines Substrats und anschließende Verklebung der beschichteten Folien mit dem Substrat, wobei die Verklebung unter gleichzeitiger Anwendung von Druck und Temperatur durchgeführt wird.

10. Verfahren nach Anspruch 9, **dadurch gekennzeichnet, dass** die Verklebung durch Anpressen mit einer Walze durchgeführt wird.

11. Verfahren nach Anspruch 9 oder 10, **dadurch gekennzeichnet, dass** die beschichtete Folienseite auf 120 bis 150 °C erwärmt wird.

12. Verfahren nach mindestens einem der Ansprüche 9 bis 11, **dadurch gekennzeichnet, dass** die beschichtete Folienseite auf eine Temperatur unterhalb des Erweichungspunkts des Schmelzklebstoffs erwärmt wird.

13. Verfahren nach mindestens einem der Ansprüche 9 bis 12, **dadurch gekennzeichnet, dass** die beschichtete Folienseite durch Strahlungswärme und/oder durch eine geheizte Walze erwärmt wird.

14. Verfahren nach mindestens einem der Ansprüche 9 bis 13, **dadurch gekennzeichnet, dass** das Substrat ausgewählt wird aus Holz-, Metall- oder Kunststoffformkörpern.

## Claims

1. Use of a hot-melt adhesive for bonding a metal, paper and/or plastics film, **characterized in that** the hot-melt adhesive comprises the following components:
- 10 to 80 wt.% of at least one thermomechanically degraded polypropylene copolymer, the thermomechanically degraded polypropylene copolymer being produced by thermomechanically degrading at least one polypropylene copolymer under shear stress, in the presence of at least one radical generator, above the softening point (ring-and-ball method according to ASTM E-28) of the polypropylene copolymer, the melt viscosity determined at 200°C (determined using a Brookfield Thermosel RVT viscometer (obtainable from Brookfield Engineering Laboratories, Inc., Stoughton, Mass. USA, a spindle 27 being used for viscosities of up to 100,000 mPa·s whereas a spindle 29 is used for determining melt viscosities greater than 100,000 mPa s, and the rotational speed of the respective spindle being adjusted such that, at a temperature of 200°C, the torque values of the viscometer are in a range from 10 to 95% of the maximum permissible torque) of the thermomechanically degraded polypropylene copolymer being less than 70% of the melt viscosity of the polypropylene copolymer likewise determined at 200°C,
- 5 to 60 wt.% of at least one tackifying resin,
- 0 to 40 wt. % of at least one further additive,
the hot-melt adhesive having a Shore D hardness of above 50 (DIN EN ISO 868:2003).

2. Use according to claim 1, **characterized in that** the thermomechanically degraded polypropylene copolymer has a melt viscosity determined at 200°C of 100 mPa·s to 200,000 mPa s.

3. Use according to at least one of claims 1 to 2, **characterized in that** the softening point of the thermomechanically degraded polypropylene copolymer is between 80°C and 170°C (ASTM E-28).

4. Use according to at least one of claims 1 to 3, **characterized in that** the hot-melt adhesive contains less than 10 wt.%, preferably less than 5 wt.%, particularly preferably less than 1 wt.% fillers.

5. Metal, paper and/or plastics film, **characterized in that** the metal, paper and/or plastics film comprises at least one adhesive layer of a hot melt adhesive, the hot melt adhesive comprising the following components:
- 10 to 80 wt.% of at least one thermomechanically degraded polypropylene copolymer, the thermomechanically degraded polypropylene copolymer being produced by thermomechanically degrading at least one polypropylene copolymer under shear stress, in the presence of at least one radical generator, above the softening point (ring-and-ball method according to ASTM E-28) of the polypropylene copolymer, the melt viscosity determined at 200 °C (determined using a Brookfield Thermosel RVT viscometer (obtainable from Brookfield Engineering Laboratories, Inc., Stoughton, Mass. USA, a spindle 27 being used for viscosities of up to 100,000 mPa·s whereas a spindle 29 is used for determining melt viscosities greater than 100,000 mPa s, and the rotational speed of the respective spindle being adjusted such that, at a temperature of 200°C, the torque values of the viscometer are in a range from 10 to 95% of the maximum permissible torque) of the thermomechanically degraded polypropylene copolymer being in the range of less than 70% of the melt viscosity of the polypropylene copolymer likewise determined at 200°C,
- 5 to 60 wt.% of at least one tackifying resin,
- 0 to 40 wt. % of at least one further additive,
and a Shore D hardness of above 50 (DIN EN ISO 868:2003).

6. Metal, paper and/or plastics film according to claim 5, **characterized in that** the adhesive layer can be activated in the heat.

7. Metal, paper and/or plastics film according to claim 5 or 6,
**characterized in that** the metal, paper and/or plastics film has a layer of the hot-melt adhesive with a thickness of 10 µm to 100 µm.

8. Metal, paper and/or plastics film according to at least one of claims 5 to 7, **characterized in that** the metal, paper and/or plastics film is a printed single-layer or multilayer film, in particular a decorative film.

9. Method for bonding a metal, paper and/or plastics film to a substrate, comprising the steps of:
a) applying a hot-melt adhesive having a Shore D hardness of above 50 (DIN EN ISO 868:2003), comprising:
- 10 to 80 wt.% of at least one thermomechanically degraded polypropylene copolymer, wherein the thermomechanically degraded polypropylene copolymer is produced by thermomechanically degrading at least one polypropylene copolymer under shear stress, in the presence of at least one radical generator, above the softening point (ring-and-ball method according to ASTM E-28) of the polypropylene copolymer, wherein the melt viscosity determined at 200°C (determined using a Brookfield Thermosel RVT viscometer (obtainable from Brookfield Engineering Laboratories, Inc., Stoughton, Mass. USA, a spindle 27 being used for viscosities of up to 100,000 mPa·s whereas a spindle 29 is used for determining melt viscosities greater than 100,000 mPa s, and the rotational speed of the respective spindle being adjusted such that, at a temperature of 200°C, the torque values of the viscometer are in a range from 10 to 95% of the maximum permissible torque) of the thermomechanically degraded polypropylene copolymer is less than 70% of the melt viscosity of the polypropylene copolymer likewise determined at 200°C,
- 5 to 60 wt.% of at least one tackifying resin,
- 0 to 40 wt.% of further additives,
to a metal, paper and/or plastics film such that a film coated on one side with a hot-melt adhesive is produced;
b) bringing together the coated film side and a substrate and subsequently bonding the coated films to the substrate, wherein the bonding is carried out with simultaneous application of pressure and temperature.

10. Method according to claim 9, **characterized in that** the adhesive bonding is carried out by pressing with a roller.

11. Method according to claim 9 or 10, **characterized in that** the coated film side is heated to 120 to 150°C.

12. Method according to at least one of claims 9 to 11, **characterized in that** the coated film side is heated to a temperature below the softening point of the hot-melt adhesive.

13. Method according to at least one of claims 9 to 12, **characterized in that** the coated film side is heated by radiant heat and/or by a heated roller.

14. Method according to at least one of claims 9 to 13, **characterized in that** the substrate is selected from wood, metal or molded plastics bodies.

## Revendications

1. Utilisation d'un adhésif thermofusible pour le collage d'une feuille de métal, de papier et/ou de plastique, **caractérisée en ce que** l'adhésif thermofusible comprend les composants suivants :
- 10 à 80 % en poids d'au moins un copolymère de polypropylène dégradé de manière thermomécanique, le copolymère de polypropylène dégradé de manière thermomécanique étant fabriqué par dégradation thermomécanique d'au moins un copolymère de polypropylène sous contrainte de cisaillement, en présence d'au moins un générateur de radicaux, au-dessus du point de ramollissement (méthode bille et anneau selon la norme ASTM E-28) du copolymère de polypropylène, la viscosité à l'état fondu déterminée à 200 °C (déterminée à l'aide d'un viscosimètre Brookfield Thermosel RVT (fourni par Brookfield Engineering Laboratories, Inc., Stoughton, Mass. USA, une broche 27 étant utilisée pour des viscosités allant jusqu'à 100 000 mPa·s tandis qu'une broche 29 étant utilisée pour la détermination de viscosités à l'état fondu supérieures à 100 000 mPa·s, et la vitesse de rotation de la broche respective étant réglée de sorte que, à une température de 200 °C, les valeurs de couple du viscosimètre se situent dans une plage de 10 à 95 % du couple maximal permissible) du copolymère de polypropylène dégradé de manière thermomécanique étant inférieure à 70 % de la viscosité à l'état fondu également déterminée à 200 °C du copolymère de polypropylène,
- 5 à 60 % en poids d'au moins une résine adhésive,
- 0 à 40 % en poids d'au moins un autre additif,
dans laquelle l'adhésif thermofusible présente une dureté Shore D supérieure à 50 (norme DIN EN ISO 868:2003).

2. Utilisation selon la revendication 1, **caractérisée en ce que** le copolymère de polypropylène dégradé de manière thermomécanique présente une viscosité à l'état fondu déterminée à 200 °C de 100 mPa.s à 200 000 mPa.s.

3. Utilisation selon au moins l'une des revendications 1 à 2,
**caractérisée en ce que** le point de ramollissement du copolymère de polypropylène dégradé de manière thermomécanique est compris entre 80 °C et 170 °C (norme ASTM E-28).

4. Utilisation selon au moins l'une des revendications 1 à 3,
**caractérisée en ce que** l'adhésif thermofusible contient moins de 10 % en poids, de préférence moins de 5 % en poids, de manière particulièrement préférée moins de 1 % en poids, de charges.

5. Feuille de métal, de papier et/ou de plastique, **caractérisée en ce que** la feuille de métal, de papier et/ou de plastique comprend au moins une couche d'adhésif d'un adhésif thermofusible, l'adhésif thermofusible comprenant les composants suivants :
- 10 à 80 % en poids d'au moins un copolymère de polypropylène dégradé de manière thermomécanique, le copolymère de polypropylène dégradé de manière thermomécanique étant fabriqué par dégradation thermomécanique d'au moins un copolymère de polypropylène sous contrainte de cisaillement, en présence d'au moins un générateur de radicaux, au-dessus du point de ramollissement (méthode bille et anneau selon la norme ASTM E-28) du copolymère de polypropylène, la viscosité à l'état fondu déterminée à 200 °C (déterminée à l'aide d'un viscosimètre Brookfield Thermosel RVT (fourni par Brookfield Engineering Laboratories, Inc., Stoughton, Mass. USA, une broche 27 étant utilisée pour des viscosités allant jusqu'à 100 000 mPa·s tandis qu'une broche 29 étant utilisée pour la détermination de viscosités à l'état fondu supérieures à 100 000 mPa·s, et la vitesse de rotation de la broche respective étant réglée de sorte que, à une température de 200 °C, les valeurs de couple du viscosimètre se situent dans une plage de 10 à 95 % du couple maximal permissible) du copolymère de polypropylène dégradé de manière thermomécanique étant inférieure à 70 % de la viscosité à l'état fondu également déterminée à 200 °C du copolymère de polypropylène,
- 5 à 60 % en poids d'au moins une résine adhésive,
- 0 à 40 % en poids d'au moins un autre additif,
et présentant une dureté Shore D supérieure à 50 (norme DIN EN ISO 868:2003).

6. Feuille de métal, de papier et/ou de plastique selon la revendication 5, **caractérisée en ce que** la couche d'adhésif peut être activée à la chaleur.

7. Feuille de métal, de papier et/ou de plastique selon la revendication 5 ou 6, **caractérisée en ce que** la feuille de métal, de papier et/ou de plastique présente une couche de l'adhésif thermofusible d'une épaisseur de 10 µm à 100 µm.

8. Feuille de métal, de papier et/ou de plastique selon au moins l'une des revendications 5 à 7, **caractérisée en ce que** la feuille de métal, de papier et/ou de plastique est une feuille monocouche ou multicouche imprimée, en particulier une feuille décorative.

9. Procédé permettant le collage d'une feuille de métal, de papier et/ou de plastique sur un substrat, comprenant les étapes de :
a) application d'un adhésif thermofusible comportant une dureté Shore D supérieure à 50 (norme DIN EN ISO 868:2003), comprenant :
- 10 à 80 % en poids d'au moins un copolymère de polypropylène dégradé de manière thermomécanique, le copolymère de polypropylène dégradé de manière thermomécanique étant fabriqué par dégradation thermomécanique d'au moins un copolymère de polypropylène sous contrainte de cisaillement, en présence d'au moins un générateur de radicaux, au-dessus du point de ramollissement (méthode bille et anneau selon la norme ASTM E-28) du copolymère de polypropylène, la viscosité à l'état fondu déterminée à 200 °C (déterminée à l'aide d'un viscosimètre Brookfield Thermosel RVT (fourni par Brookfield Engineering Laboratories, Inc., Stoughton, Mass. USA, une broche 27 étant utilisée pour des viscosités allant jusqu'à 100 000 mPa·s tandis qu'une broche 29 étant utilisée pour la détermination de viscosités à l'état fondu supérieures à 100 000 mPa·s, et la vitesse de rotation de la broche respective étant réglée de sorte que, à une température de 200 °C, les valeurs de couple du viscosimètre se situent dans une plage de 10 à 95 % du couple maximal permissible) du copolymère de polypropylène dégradé de manière thermomécanique étant inférieure à 70 % de la viscosité à l'état fondu également déterminée à 200 °C du copolymère de polypropylène,
- 5 à 60 % en poids d'au moins une résine adhésive,
- 0 à 40 % en poids d'autres additifs,
sur une feuille de métal, de papier et/ou de plastique de manière à former une feuille revêtue d'un adhésif thermofusible sur une face ;
b) assemblage de la face de feuille revêtue et d'un substrat, puis collage de la feuille revêtue avec le substrat, le collage étant effectué en appliquant simultanément de la pression et de la température.

10. Procédé selon la revendication 9, **caractérisé en ce que** le collage est effectué par pression avec un rouleau.

11. Procédé selon la revendication 9 ou 10, **caractérisé en ce que** la face de feuille revêtue est chauffée à 120 à 150 °C.

12. Procédé selon au moins l'une des revendications 9 à 11,
**caractérisé en ce que** la face de feuille revêtue est chauffée à une température inférieure au point de ramollissement de l'adhésif thermofusible.

13. Procédé selon au moins l'une des revendications 9 à 12,
**caractérisé en ce que** la face de feuille revêtue est chauffée par chaleur rayonnante et/ou par un rouleau chauffé.

14. Procédé selon au moins l'une des revendications 9 à 13,
**caractérisé en ce que** le substrat est choisi parmi des corps moulés en bois, en métal ou en plastique.
